# EUROPEAN PATENT APPLICATION

(11) **EP 4 585 492 A1**
(43) Date of publication of application: **16.07.2025**
(21) Application number: 25150917.0
(22) Date of filing: 09.01.2025
(51) Int. Cl.: B62D 7/15, B62D 15/02

(54) **METHOD FOR PLANNING PARKING TRAJECTORY , STORAGE MEDIUM, CONTROLLER, AND VEHICLE**

(30) Priority: 12.01.2024 CN 202410056482
(71) Applicant: BYD Company Limited, Shenzhen, Guangdong 518118 (CN)
(72) Inventor: YANG, Dongsheng, Shenzhen, 518118 (CN); LI, Jiaxin, Shenzhen, 518118 (CN); HAN, Bing, Shenzhen, 518118 (CN); XU, Chi, Shenzhen, 518118 (CN)
(74) Representative: Mathys & Squire

(57) **Abstract**

The present disclosure relates to a method for planning a parking trajectory, a storage medium, a controller, and a vehicle, and relates to the field of autonomous driving technologies. Parking trajectory planning can be performed based on a single-wheel rotation function of a vehicle, thereby improving parking efficiency. The method for planning a parking trajectory includes: determining an initial parking point, a target parking point, and a rotation start point of a vehicle for a target parking spot, the vehicle having a function of rotating about a single wheel, and the rotation start point being a start point of rotation of the vehicle about a target wheel in a parking-out trajectory from the target parking point to the initial parking point; and determining a target parking trajectory of the vehicle from the initial parking point to the target parking point according to the initial parking point, the target parking point, and the rotation start point.

## Description

### FIELD

The present disclosure relates to the field of autonomous driving technologies, and specifically, to a method for planning a parking trajectory, a storage medium, a controller, and a vehicle.

### BACKGROUND

With the development of vehicle technologies, a vehicle may perform automatic parking through a planned parking trajectory, that is, the vehicle may move to a specified parking spot along the planned trajectory. However, in a parking scenario with a narrow parking spot, a vehicle usually requires multiple gear shifts to park in the parking spot.

### SUMMARY

To overcome the technical problems existing in the related art, the present disclosure provides a method for planning a parking trajectory, a storage medium, a controller, and a vehicle.

To achieve the above objectives, according to a first aspect, the present disclosure provides a method for planning a parking trajectory. The method includes:

An initial parking point, a target parking point, and a rotation start point of a vehicle for a target parking spot are determined. The vehicle has a function of rotating about a single wheel. The rotation start point is a start point of rotation of the vehicle about a target wheel in a parking-out trajectory of the vehicle from the target parking point to the initial parking point.

A target parking trajectory of the vehicle from the initial parking point to the target parking point is determined according to the initial parking point, the target parking point, and the rotation start point.

Optionally, that a target parking trajectory of the vehicle from the initial parking point to the target parking point is determined according to the initial parking point, the target parking point, and the rotation start point includes:

A first trajectory is determined according to the target parking point and the rotation start point, and a second trajectory is determined according to the rotation start point and the initial parking point.

The target parking trajectory of the vehicle from the initial parking point to the target parking point is obtained according to the first trajectory and the second trajectory.

Optionally, that a first trajectory is determined according to the target parking point and the rotation start point, and a second trajectory is determined according to the rotation start point and the initial parking point includes:

The first trajectory from the target parking point to the rotation start point is determined, and the second trajectory from the rotation start point to the initial parking point is determined.

That the target parking trajectory of the vehicle from the initial parking point to the target parking point is obtained according to the first trajectory and the second trajectory includes:

The first trajectory and the second trajectory are spliced to obtain an initial parking trajectory from the target parking point to the initial parking point. The initial parking trajectory is reversed to obtain the target parking trajectory of the vehicle from the initial parking point to the target parking point.

Optionally, that a second trajectory is determined according to the rotation start point and the initial parking point includes:

A minimum rotation angle and a maximum rotation angle of the vehicle rotating about an axle center of the target wheel in the parking-out trajectory are determined. A target rotation end point is determined according to a first rotation end point after the vehicle rotates about the minimum rotation angle and a second rotation end point after the vehicle rotates about the maximum rotation angle.

A single-wheel rotation trajectory from the rotation start point to the target rotation end point, and an outside-spot parking trajectory from the target rotation end point to the initial parking point are determined.

The single-wheel rotation trajectory and the outside-spot parking trajectory are spliced into the second trajectory from the rotation start point to the initial parking point.

Optionally, that a target rotation end point is determined according to a first rotation end point after the vehicle rotates about the minimum rotation angle and a second rotation end point after the vehicle rotates about the maximum rotation angle includes:

Sampling is performed between the first rotation end point after the vehicle rotates about the minimum rotation angle and the second rotation end point after the vehicle rotates about the maximum rotation angle to obtain multiple sampling points.

For each sampling point, a first candidate trajectory from the sampling point to the rotation start point is determined through different trajectory planning algorithms. A target candidate trajectory is determined according to a trajectory cost of each first candidate trajectory. A sampling point corresponding to the target candidate trajectory is used as the target rotation end point.

Correspondingly, the outside-spot parking trajectory is the target candidate trajectory.

Optionally, the trajectory cost of the first candidate trajectory is determined based on at least one of a trajectory length of the first candidate trajectory, a single-wheel rotation angle of the vehicle in the first candidate trajectory, a collision risk value of the vehicle in the first candidate trajectory, and the number of gear shifts of the vehicle in the first candidate trajectory.

Optionally, that a target candidate trajectory is determined according to a trajectory cost of each first candidate trajectory includes:

When the vehicle has no collision risk with a surrounding obstacle in any of the first candidate trajectories, the target candidate trajectory is determined according to the trajectory cost of each first candidate trajectory.

The method further includes:
When the vehicle has a collision risk with a surrounding obstacle in a first candidate trajectory, a second candidate trajectory from each sampling point to the initial parking point is determined in sequence through a trajectory search method, until the vehicle has no collision risk with the surrounding obstacle in the obtained second candidate trajectory.

The finally obtained second candidate trajectory is determined as the target candidate trajectory.

Optionally, the minimum rotation angle is greater than a first preset angle, and the vehicle has no collision risk with any obstacle surrounding the target parking spot during driving out of the target parking spot in a straight line along the first rotation end point corresponding to the minimum rotation angle.

The maximum rotation angle is less than a second preset angle, and the vehicle has no collision risk with any obstacle outside the target parking spot during rotation about the maximum rotation angle.

Optionally, that a minimum rotation angle of the vehicle rotating about an axle center of the target wheel in the parking-out trajectory is determine includes:

An initial first rotation angle is determined, and the following steps are cyclically performed: An initial rotation end point after the vehicle rotates about the axle center of the target wheel by the first rotation angle from the rotation start point is determined. A linear trajectory between the initial rotation end point and a target rear axle center point of the vehicle is determined. The first rotation angle is increased according to a first preset step when the vehicle has a collision risk in the linear trajectory to obtain a new first rotation angle until the vehicle has no collision risk in the obtained linear trajectory. The target rear axle center point is located at a portion of the vehicle outside the target parking spot and a distance from the initial rotation end point in a target direction is a preset distance. The target direction is a direction parallel to a short side of the target parking spot.

The finally obtained first rotation angle is determined as the minimum rotation angle of the vehicle rotating about the axle center of the target wheel in the parking-out trajectory.

Optionally, that a maximum rotation angle of the vehicle rotating about an axle center of the target wheel in the parking-out trajectory is determined includes:

An initial second rotation angle is determined, and the following steps are cyclically performed: Whether the vehicle has a collision risk after rotating about the axle center of the target wheel by the second rotation angle from the rotation start point is determined. When the vehicle has no collision risk, the second rotation angle is increased according to a second preset step to obtain a new second rotation angle, until the vehicle has a collision risk.

A rotation angle obtained by subtracting the second preset step from the finally obtained second rotation angle is determined as the maximum rotation angle of the vehicle rotating about the axle center of the target wheel in the parking-out trajectory.

Optionally, when the target parking spot is located at the right front side of the vehicle, the target wheel is a left front wheel of the vehicle, and correspondingly, the target parking trajectory is a head-in parking trajectory. Alternatively,
when the target parking spot is located at the right rear side of the vehicle, the target wheel is a left rear wheel of the vehicle, and correspondingly, the target parking trajectory is a back-in parking trajectory. Alternatively,
when the target parking spot is located at the left front side of the vehicle, the target wheel is a right front wheel of the vehicle, and correspondingly, the target parking trajectory is a head-in parking trajectory. Alternatively,
when the target parking spot is located at the left rear side of the vehicle, the target wheel is a right rear wheel of the vehicle, and correspondingly, the target parking trajectory is a back-in parking trajectory.

According to a second aspect, the present disclosure provides a computer-readable storage medium, having a computer program instruction stored therein. The computer program instruction, when executed by a processor, implements the method for planning a parking trajectory according to the first aspect.

According to a third aspect, the present disclosure provides a controller, including:
a storage apparatus, the storage apparatus storing a computer program; and
a control apparatus, the control apparatus being configured to execute the computer program to implement the method for planning a parking trajectory according to the first aspect.

According to a fourth aspect, the present disclosure provides a vehicle. The vehicle includes the controller according to the third aspect.

Optionally, the vehicle includes four motors. Each motor correspondingly drives one wheel.

Through the foregoing technical solutions, the following beneficial effects can be achieved:

A target parking trajectory of a vehicle from an initial parking point to a target parking point is determined according to the initial parking point, the target parking point, and a rotation start point of the vehicle for a target parking spot. The vehicle has a function of rotating about a single wheel. The rotation start point is a start point of rotation of the vehicle about a target wheel in a parking-out trajectory from the target parking point to the initial parking point. Therefore, the target parking trajectory can be planned through the single-wheel rotation function of the vehicle. In this way, when the vehicle is to be parked according to the target parking trajectory, the vehicle can be parked in a narrow parking spot at a time, thereby reducing the number of gear shifts, reducing a time for parking the vehicle, and improving parking efficiency.

Other features and advantages of the present disclosure will be described in detail in the following DETAILED DESCRIPTION part.

### BRIEF DESCRIPTION OF THE DRAWINGS

The accompanying drawings are intended to provide a further understanding of the present disclosure and constitute a part of this specification. The accompanying drawings and the specific implementations below are used together for explaining the present disclosure rather than constituting a limitation to the present disclosure. In the drawings:
FIG. 1 is a schematic diagram of a parking process according to an exemplary embodiment of the present disclosure;
FIG. 2 is another schematic diagram of a parking process according to an exemplary embodiment of the present disclosure;
FIG. 3 is a flowchart of a method for planning a parking trajectory according to an exemplary embodiment of the present disclosure;
FIG. 4 is a schematic diagram of parking trajectory planning according to an exemplary embodiment of the present disclosure;
FIG. 5 is another schematic diagram of parking trajectory planning according to an exemplary embodiment of the present disclosure;
FIG. 6a and FIG. 6b are schematic diagrams of determining a target rotation end point according to an exemplary embodiment of the present disclosure;
FIG. 7 is a schematic diagram of determining a minimum rotation angle according to an exemplary embodiment of the present disclosure;
FIG. 8 is a schematic diagram of determining a maximum rotation angle according to an exemplary embodiment of the present disclosure;
FIG. 9a to FIG. 9d are schematic diagrams of different parking-in trajectories according to an exemplary embodiment of the present disclosure;
FIG. 10 is a block diagram of a controller according to an exemplary embodiment of the present disclosure; and
FIG. 11 is a block diagram of a vehicle according to an exemplary embodiment of the present disclosure.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

As described in the BACKGROUND part, the existing trajectory planning method is completed for a vehicle (hereinafter referred to as a conventional vehicle for short) that does not have a single-wheel rotation function. A rotation center point of the conventional vehicle during rotation is a point located outside the vehicle. As a result, a rotation angle of the vehicle during rotation is large. Therefore, in a parking scenario with a narrow parking spot, such as a scenario of parallel parking in a narrow space, the vehicle usually requires multiple gear shifts to be parked in the parking spot, leading to low parking efficiency.

It should be understood that, a four-wheel independent drive technology means that four motors are configured on a vehicle, and each motor drives one wheel separately, so that steering and rotation speeds of all four wheels of the vehicle can be different. When a vehicle is configured with the four-wheel independent drive technology, the vehicle in a stopped state can lock a specific wheel to remain different. The vehicle is controlled to rotate 360° clockwise or counterclockwise with an axle center of the locked wheel as a circle center. In other words, the vehicle has a function of rotating about a single wheel. In this way, a rotation angle of the vehicle during rotation can be controlled within a small range. For example, in a parking scenario with a narrow parking spot, a single-wheel rotation manner can effectively reduce a space required for achieving parking, so that a vehicle can be parked in the narrow parking spot at a time.

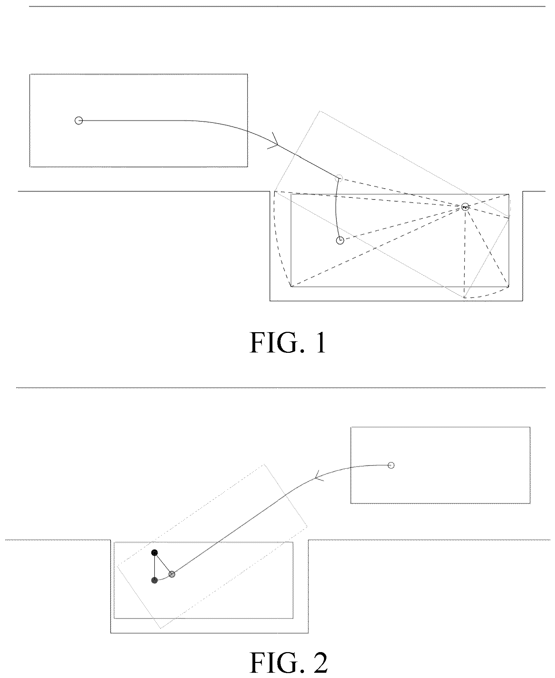

Referring to FIG. 1, as an example, the parking spot is located at the right front side of the vehicle. In this case, a traveling trajectory of the vehicle in a head-in parking mode is as follows: First, the vehicle is driven forward and steered rightward into the parking spot. Then, the vehicle rotates counterclockwise about a left front wheel of the vehicle until the vehicle body is parallel to the parking spot. Finally, the vehicle is adjusted forward or backward to be located in the middle of the parking spot.

Referring to FIG. 2, as an example, the parking spot is located at the right rear side of the vehicle. In this case, a traveling trajectory of the vehicle in a back-in parking mode is as follows: First, the vehicle is reversed and steered rightward into the parking spot. Then, the vehicle rotates clockwise about a left rear wheel of the vehicle until the vehicle body is parallel to the parking spot. Finally, the vehicle is adjusted forward or backward to be located in the middle of the parking spot.

In conclusion, a parallel parking process based on single-wheel rotation may be summarized into three stages: driving into the parking spot, single-wheel rotation, and position adjustment. According to this, the present disclosure provides a method for planning a parking trajectory based on a single-wheel rotation function of a vehicle, to improve a parking success rate and parking efficiency of automatic parking of a vehicle.

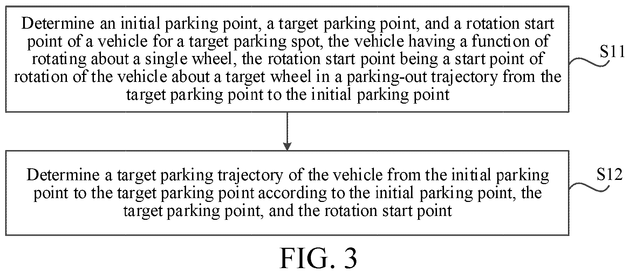

FIG. 3 is a flowchart of a method for planning a parking trajectory according to an exemplary embodiment of the present disclosure. As shown in FIG. 3, the method for planning a parking trajectory may include the following steps:
Step S11: An initial parking point, a target parking point, and a rotation start point of a vehicle for a target parking spot are determined. The vehicle has a function of rotating about a single wheel. The rotation start point is a start point of rotation of the vehicle about a target wheel in a parking-out trajectory from the target parking point to the initial parking point.

It should be noted that the initial parking point init_point represents a position point corresponding to a center point of a rear axle of the vehicle when parking is started. The target parking point target point represents a position point corresponding to the center point of the rear axle of the vehicle after the vehicle is safely parked into the target parking spot.

A two-dimensional coordinate system may be established by using a short side of the target parking spot as a Y-axis and a long side of the target parking spot as an X-axis. The two-dimensional coordinate system may cover positions of the center point of the rear axle of the vehicle in the entire parking process, so that the initial parking point, the target parking point, and the rotation start point can be determined according to coordinate points of the center point of the rear axle of the vehicle in the two-dimensional coordinate system when the vehicle is at different positions in the parking process.

It should be understood that the target parking spot may be a vertical parking spot or a parallel parking spot. This is not limited in the present disclosure.

Step S12: A target parking trajectory of the vehicle from the initial parking point to the target parking point is determined according to the initial parking point, the target parking point, and the rotation start point.

It should be understood that, in a case that the initial parking point is outside the target parking spot, and that the target parking point and the rotation start point are in the target parking spot, the target parking trajectory may be a parking-in trajectory. In a case that the initial parking point and the rotation start point are in the target parking spot, and that the target parking point is in the target parking spot, the target parking trajectory may be a parking-out trajectory.

In this embodiment of the present disclosure, the target parking trajectory of the vehicle from the initial parking point to the target parking point is determined according to the initial parking point, the target parking point, and the rotation start point of the vehicle for the target parking spot. The vehicle has a function of rotating about a single wheel. The rotation start point is a start point of rotation of the vehicle about a target wheel in a parking-out trajectory from the target parking point to the initial parking point. Therefore, the target parking trajectory can be planned through the single-wheel rotation function of the vehicle. In this way, when the vehicle is to be parked according to the target parking trajectory, the vehicle can be parked in a narrow parking spot at a time, thereby reducing the number of gear shifts, reducing a time for parking the vehicle, and improving parking efficiency.

To help a person skilled in the art better understand the method for planning a parking trajectory provided in the present disclosure, the steps of the method are described in detail below with examples.

In an optional embodiment, in step S12, that a target parking trajectory of the vehicle from the initial parking point to the target parking point is determined according to the initial parking point, the target parking point, and the rotation start point may include:

A first trajectory is determined according to the target parking point and the rotation start point, and a second trajectory is determined according to the rotation start point and the initial parking point.

The target parking trajectory of the vehicle from the initial parking point to the target parking point is obtained according to the first trajectory and the second trajectory.

It should be noted that, in a case that the target parking point coincides with the rotation start point, the target parking trajectory of the vehicle from the initial parking point to the target parking point may be obtained directly according to the initial parking point and the target parking point.

For example, according to the target parking point target point and the initial parking point init_point of the vehicle corresponding to the target parking spot, the target parking trajectory of the vehicle from the initial parking point init_point to the target parking point target point may be obtained.

It should be understood that the first trajectory and the second trajectory may be simultaneously obtained through planning, or the first trajectory may be planned before the second trajectory is planned, or the second trajectory may be planned before the first trajectory is planned. This is not limited in the present disclosure.

It should be noted that the first trajectory may be an adjustment trajectory of the vehicle in the target parking spot. In actual application, to avoid collision between vehicle contours, the adjustment trajectory in the target parking spot is a horizontal straight line. Therefore, the first trajectory in this embodiment of the present disclosure may be a linear trajectory. The second trajectory may be a movement trajectory of the vehicle between the target parking spot and a position at which parking starts, and may be a curved trajectory.

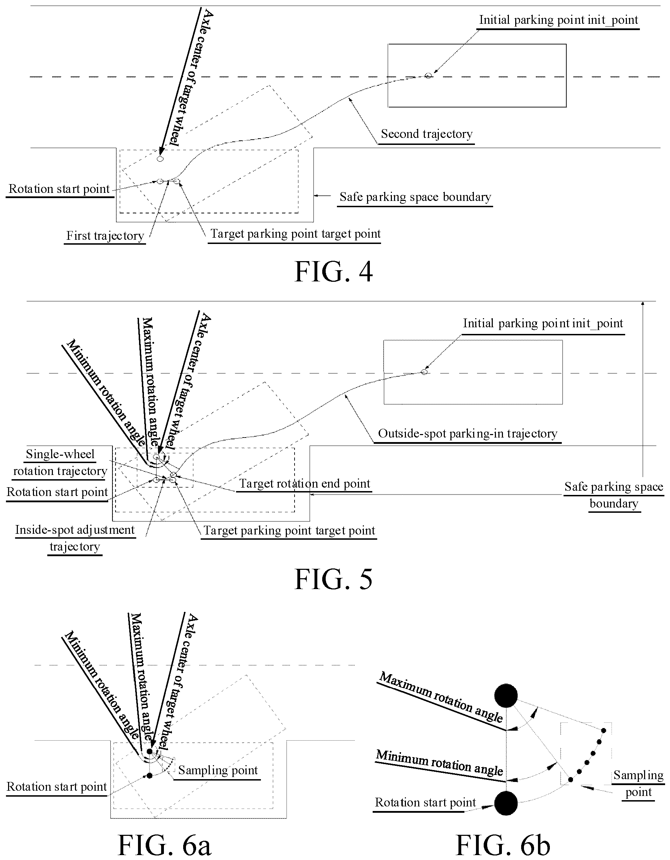

As shown in FIG. 4, the first traj ectory may be determined according to the target parking point target point and the rotation start point of the vehicle that correspond to the target parking spot. The second trajectory may be determined according to the rotation start point and the initial parking point init_point. In this way, the target parking trajectory of the vehicle from the initial parking point init_point to the target parking point target point may be obtained according to the first trajectory and the second trajectory. Therefore, parking trajectory planning is performed in a segmented planning manner. This can reduce the difficulty of trajectory planning, thereby further improving the efficiency of the trajectory planning.

In an optional embodiment, that a first trajectory is determined according to the target parking point and the rotation start point, and a second trajectory is determined according to the rotation start point and the initial parking point may include:

The first trajectory from the target parking point to the rotation start point is determined, and the second trajectory from the rotation start point to the initial parking point is determined.

That the target parking trajectory of the vehicle from the initial parking point to the target parking point is obtained according to the first trajectory and the second trajectory may include:

The first trajectory and the second trajectory are spliced to obtain an initial parking trajectory from the target parking point to the initial parking point, and the initial parking trajectory is reversed to obtain the target parking trajectory of the vehicle from the initial parking point to the target parking point.

It should be understood that, in a case that the target parking trajectory is a parking-out trajectory, there is no need to perform reversing processing. In a case that the target parking trajectory is a parking-in trajectory, a parking-out trajectory needs to be reversed to obtain the corresponding parking-in trajectory.

It should be understood that, in both the first trajectory and the second trajectory, there is no collision risk between the vehicle and a safe parking space boundary. The safe parking space boundary may be a space boundary within which the vehicle may collide during parking, for example, a space boundary of a target parking spot and a space boundary outside a target garage shown in FIG. 5.

It should be noted that, in this embodiment of the present disclosure, during the planning of the parking-in trajectory of the vehicle from the initial parking point to the target parking point, the rotation start point needs to be determined first. However, it is difficult to determine the rotation start point during direct planning of the parking-in trajectory. Therefore, the present disclosure may first plan the parking-out trajectory of the vehicle from the target parking point to the initial parking point, and then reverse the parking-out trajectory to obtain the parking-in trajectory of the vehicle from the initial parking point to the target parking point. In addition, during the determining of the rotation start point during the direct planning of the parking-in trajectory, complex calculation needs to be performed through a large amount of data. Therefore, in this embodiment of the present disclosure, the rotation start point can be quickly determined according to relevant data obtained when the vehicle is located in the target parking spot. The entire process involves only a small amount of data, and the calculation process is simple. This further reduces an amount of calculation for trajectory planning.

For example, as shown in FIG. 4, in a case that the target parking spot is located at the right rear side of the vehicle, a position of a center point of a rear axle of the vehicle outside the parking spot when parking of the vehicle starts is denoted as init_point (an initial parking point), and a position of the center point of the rear axle of the vehicle in the parking spot when parking is completed is denoted as target_point (a target parking point). A parking-out trajectory from target_point to init_point is planned first, and then the parking-out trajectory is reversed to obtain a parking-in trajectory from init_point to target_point.

Through the foregoing manner, a single-wheel rotation function of the vehicle may be combined in this embodiment of the present disclosure. The parking-out trajectory from the target parking point to the initial parking point is planned first, and then the parking-out trajectory is reversed to obtain the parking-in trajectory from the initial parking point to the target parking point. In this way, a new parking trajectory planning manner is provided. This enables the vehicle to be parked in a narrow parking spot at a time, thereby reducing the number of gear shifts, reducing a time for parking the vehicle, and improving parking efficiency.

In an optional embodiment, that the second trajectory from the rotation start point to the initial parking point is determined may include:
A minimum rotation angle and a maximum rotation angle of the vehicle rotating about an axle center of the target wheel in the parking-out trajectory are determined. A target rotation end point is determined according to a first rotation end point after the vehicle rotates about the minimum rotation angle and a second rotation end point after the vehicle rotates about the maximum rotation angle.

A single-wheel rotation trajectory from the rotation start point to the target rotation end point, and an outside-spot parking trajectory from the target rotation end point to the initial parking point are determined.

The single-wheel rotation trajectory and the outside-spot parking trajectory are spliced into the second trajectory from the rotation start point to the initial parking point.

For ease of description, a single-wheel rotation process is denoted as VOT, a rotation start point in a parking-out trajectory from a target parking point target_point to an initial parking point init_point is denoted as vot_start, and a target rotation end point is denoted as vot_end. A trajectory from target_point to vot_start is an inside-spot adjustment trajectory, and planning of the inside-spot adjustment trajectory is denoted as Planner1. A trajectory from vot_start to vot_end is a single-wheel rotation trajectory, and planning of the single-wheel rotation trajectory is denoted as VOT-Planner. A trajectory from vot_end to init_point is an outside-spot parking-in trajectory, and planning of the outside-spot parking-in trajectory is denoted as Planner2.

It should be understood that, the planning of the second trajectory is composed of VOT-Planner+Planner2. Correspondingly, in a case that the target parking point coincides with the rotation start point, the planning of the target parking trajectory is composed of VOT-Planner+Planner2. Correspondingly, in a case that the target parking point does not coincide with the rotation start point, the planning of the target parking trajectory is composed of Planner1+VOT-Planner+Planner2.

It should be noted that, the vehicle rotates about the axle center of the target wheel in the parking-out trajectory, and there is no collision risk of the vehicle during the entire process from the rotation start point to the target rotation end point. Therefore, the target rotation end point may be determined according to the minimum rotation angle and the maximum rotation angle. Then, the single-wheel rotation trajectory on which the vehicle rotates about the axle center of the target wheel from the rotation start point to the target rotation end point is planned. The outside-spot parking trajectory from the target rotation end point to the initial parking point is planned. The single-wheel rotation trajectory and the outside-spot parking trajectory are spliced into the second trajectory.

For example, as shown in FIG. 5, a target rotation end point vot_end may be determined according to the minimum rotation angle and the maximum rotation angle. Then, a single-wheel rotation trajectory from vot_start to vot_end is planned, and an outside-spot parking trajectory from vot_end to init_point is planned. The single-wheel rotation trajectory and the outside-spot parking trajectory are spliced to obtain a trajectory from vot_start to init_point.

In this embodiment of the present disclosure, based on the single-wheel rotation function of the vehicle, the rotation end point may be determined first according to a minimum rotation angle and a maximum rotation angle of the vehicle during single-wheel rotation on the parking trajectory. Then, segmented trajectory planning is performed according to the rotation start point, the rotation end point, and the initial parking point to obtain the second trajectory. This can reduce the difficulty of planning the second trajectory, and further improve the efficiency of planning the target parking trajectory.

In an optional embodiment, that a target rotation end point is determined according to a first rotation end point after the vehicle rotates about the minimum rotation angle and a second rotation end point after the vehicle rotates about the maximum rotation angle may include:

Sampling is performed between the first rotation end point after the vehicle rotates about the minimum rotation angle and the second rotation end point after the vehicle rotates about the maximum rotation angle to obtain multiple sampling points.

For each sampling point, a first candidate trajectory from the sampling point to the rotation start point is determined through different trajectory planning algorithms. A target candidate trajectory is determined according to a trajectory cost of each first candidate trajectory. A sampling point corresponding to the target candidate trajectory is used as the target rotation end point.

Correspondingly, the outside-spot parking trajectory is the target candidate trajectory.

It should be understood that, as shown in FIG. 6a and FIG. 6b, a first rotation end point after the vehicle rotates about the minimum rotation angle may be used as a sampling start point, and a second rotation end point after the vehicle rotates about the maximum rotation angle may be used as a sampling end point. Then, sampling is performed from the sampling start point to the sampling end point according to a sampling step to obtain multiple sampling points. The sampling step may be preset according to an accuracy requirement of trajectory planning, or may be preset according to a distance of a vehicle contour with a rotation angle relative to a safe parking space boundary during single-wheel rotation of the vehicle. In the present disclosure, the sampling step is set to 5°.

It should be noted that, the trajectory planning algorithms may include existing trajectory planning algorithms such as a geometric trajectory planning algorithm and an RS curve trajectory algorithm. The geometric trajectory algorithm may be used for trajectory planning during parallel parking or angle parking. The RS curve algorithm may be used for planning a curve trajectory during parking trajectory planning.

In this embodiment of the present disclosure, the target candidate trajectory may be determined according to the trajectory costs of multiple first candidate trajectories from each sampling point to the rotation start point, to obtain the target rotation end point. That is, the target rotation end point is determined according to the target candidate trajectory with the lowest trajectory cost, so that a cost of the target parking trajectory obtained through trajectory planning according to the target rotation end point during vehicle traveling is the lowest, thereby further reducing costs of automatic parking, and improving the efficiency of automatic parking.

In an optional implementation, the trajectory cost of the first candidate trajectory is determined based on at least one of a trajectory length of the first candidate trajectory, a single-wheel rotation angle of the vehicle in the first candidate trajectory, a collision risk value of the vehicle in the first candidate trajectory, and the number of gear shifts of the vehicle in the first candidate trajectory.

It should be understood that, a larger number of types of parameters involved in determining the trajectory cost lead to higher accuracy of the obtained trajectory cost and a more reliable target candidate trajectory determined based on the trajectory cost.

For example, in a case that the trajectory cost is determined according to the trajectory length, the single-wheel rotation angle, the collision risk value, and the number of gear shifts, cost values respectively corresponding to the trajectory length, the single-wheel rotation angle, the collision risk value, and the number of gear shifts may be substituted into a calculation formula: Costtraj = p1 COSttrajectory length + p2 costsingle-wheel rotation angle + p3 COStcollision risk value + p4 costnumber of gear shifts,

where Costtraj represents the trajectory cost, p1 represents a preset weight of the trajectory length, cost_{trajectory length} represents a cost value corresponding to the trajectory length, p2 represents a preset weight corresponding to the single-wheel rotation angle, cost_{single-wheel rotation angle} represents a cost value corresponding to the single-wheel rotation angle, p3 represents a preset weight corresponding to the collision risk value, cost_{collision risk value} represents a cost value corresponding to the collision risk value, p4 represents a preset weight corresponding to the number of gear shifts, and cost_{number of gear shifts} represents a cost value corresponding to the number of gear shifts.

It should be noted that p1, p2, p3, and p4 may be optimized and adjusted through simulated or real vehicle testing.

In this embodiment of the present disclosure, impact of the trajectory length, the single-wheel rotation angle, the trajectory collision risk, and the number of trajectory gear shifts on parking efficiency and parking safety are comprehensively considered during calculation of the trajectory cost. Therefore, a trajectory cost of each trajectory may be obtained while parking safety and parking efficiency are ensured. In this way, the target candidate trajectory is determined based on the trajectory cost, so that costs of automatic parking can be reduced and the efficiency of automatic parking can be improved.

In an optional implementation, that a target candidate trajectory is determined according to a trajectory cost of each first candidate trajectory may include:

When the vehicle has no collision risk with a surrounding obstacle in any of the first candidate trajectories, the target candidate trajectory is determined according to the trajectory cost of each first candidate trajectory.

The method for planning a parking trajectory may further include:

When the vehicle has a collision risk with a surrounding obstacle in a first candidate trajectory, a second candidate trajectory from each sampling point to the initial parking point is determined in sequence through a trajectory search method, until the vehicle has no collision risk with the surrounding obstacle in the obtained second candidate trajectory.

The finally obtained second candidate trajectory is determined as the target candidate trajectory.

It should be noted that, the trajectory search method may include algorithms such as hybrid A* and recurrently target-attending tracking (RTT). Compared with the trajectory planning algorithm, the trajectory search algorithm has more parameters involved during calculation and a more complex calculation process. Both the hybrid A* algorithm and the RTT algorithm can perform trajectory planning on each sampling point in sequence. Each time a second candidate trajectory is obtained through planning, whether the vehicle has a collision risk with a surrounding obstacle in the second candidate trajectory is determined. If the vehicle has a collision risk with the surrounding obstacle in the second candidate trajectory, trajectory planning is performed on a next sampling point. If the vehicle has no collision risk with the surrounding obstacle in the second candidate trajectory, the second candidate trajectory planned this time is determined as the target candidate trajectory, and there is no need to perform trajectory planning on a next sampling point.

It should be understood that, when the vehicle has no collision risk with the surrounding obstacle in the first candidate trajectory obtained through the trajectory planning method, the trajectory planning succeeds, and there is no need to perform trajectory planning through the trajectory search algorithm. When the vehicle has a collision risk with the surrounding obstacle in the first candidate trajectory obtained through the trajectory planning method, the trajectory planning fails, and the trajectory planning may be performed through the trajectory search algorithm to obtain the target candidate trajectory.

For example, as shown in FIG. 6a and FIG. 6b, the planning process of the target candidate trajectory may include:
I. Sampling is performed between the first rotation end point after the vehicle rotates about the minimum rotation angle and the second rotation end point after the vehicle rotates about the maximum rotation angle to obtain n sampling points pi.
II. For each sampling point, a trajectory from the sampling point pi to the initial parking point init_point is planned through the geometric trajectory planning algorithm, and a trajectory from the sampling point pi to the initial parking point init_point is planned through the RS curve trajectory algorithm, to obtain 2n first candidate trajectories.
III. Whether the vehicle has a collision risk with a surrounding obstacle in the 2n first candidate trajectories is determined. If yes, V is performed. If no, IV is performed.
IV. A target candidate trajectory with the lowest trajectory cost is determined from the 2n first candidate trajectories according to a trajectory cost of each candidate trajectory, and a sampling point corresponding to the target candidate trajectory is used as the target rotation end point.
V. A second candidate trajectory from each sampling point pi to the initial parking point init_point is determined in sequence through the RTT algorithm until the vehicle has no collision risk with the surrounding obstacle in the obtained second candidate trajectory. The finally obtained second candidate trajectory is determined as the target candidate trajectory. A sampling point corresponding to the target candidate trajectory is used as the target rotation end point.

In an optional implementation, the minimum rotation angle is greater than a first preset angle, and the vehicle has no collision risk with any obstacle surrounding the target parking spot during driving out of the target parking spot in a straight line along the first rotation end point corresponding to the minimum rotation angle.

The maximum rotation angle is less than a second preset angle, and the vehicle has no collision risk with any obstacle outside the target parking spot during rotation about the maximum rotation angle.

It should be noted that the first preset angle and the second preset angle may be empirical values determined based on a large amount of actual parking data. In this embodiment of the present disclosure, the first preset angle may be set to 20°, and the second preset angle may be set to 60°. For example, the minimum rotation angle may be greater than 20°, and it can be ensured that the vehicle has no collision risk with any obstacle surrounding the target parking spot during driving out of the target parking spot in a straight line along the first rotation end point corresponding to the minimum rotation angle. The maximum rotation angle may be less than 60°, and it can be ensured that the vehicle has no collision risk with any obstacle outside the target parking spot during rotation about the axle center of the target wheel by the maximum rotation angle.

In an optional embodiment, that a minimum rotation angle of the vehicle rotating about an axle center of the target wheel in the parking-out trajectory is determined may include:

An initial first rotation angle is determined, and the following steps are cyclically performed: An initial rotation end point after the vehicle rotates about the axle center of the target wheel by the first rotation angle from the rotation start point is determined. A linear trajectory between the initial rotation end point and a target rear axle center point of the vehicle is determined. The first rotation angle is increased according to a first preset step when the vehicle has a collision risk in the linear trajectory to obtain a new first rotation angle until the vehicle has no collision risk in the obtained linear trajectory. The target rear axle center point is located at a portion of the vehicle outside the target parking spot and a distance from the initial rotation end point in a target direction is a preset distance. The target direction is a direction parallel to a short side of the target parking spot.

The finally obtained first rotation angle is determined as the minimum rotation angle of the vehicle rotating about the axle center of the target wheel in the parking-out trajectory.

For example, in this embodiment of the present disclosure, the first preset step may be set to 2%.

It should be understood that, in a case that the parking trajectory of the vehicle is a back-in parking trajectory, the target rear axle center point may be on a ray with the initial rotation end point vot_point1 as a start point along a vehicle head direction, and a longitudinal axis distance between the target rear axle center point point and the initial rotation end point vot_point1 in the two-dimensional coordinate system described above may be 1.5 m. In a case that the target parking spot is a parallel parking spot, a direction of a longitudinal axis in the two-dimensional coordinate system is a width direction of the vehicle when the vehicle is located in the parallel parking spot. For example, the target rear axle center point may be on a ray with the initial rotation end point vot_point1 as a start point along a vehicle head direction, and a distance between the target rear axle center point point and the initial rotation end point vot_point1 in the width direction of the vehicle when the vehicle is located in the parallel parking spot is 1.5 m.

It should be understood that, a rotation direction in which the vehicle rotates about the axle center of the target wheel from the rotation start point may be determined by positions of the vehicle and the target parking spot. For example, when the target parking spot is at the right front or left rear side of the vehicle, the rotation direction may be counterclockwise. When the target parking spot is at the right rear or left front side of the vehicle, the rotation direction may be clockwise.

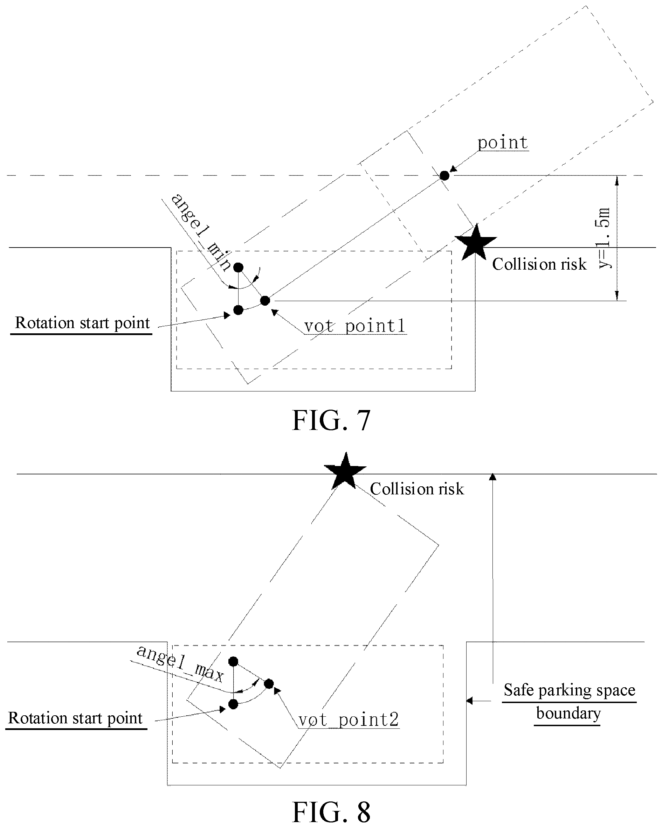

For example, the target parking spot is at the right rear side of the vehicle. Referring to FIG. 7, the first preset step is denoted as angel_step_1, the target rear axle center point is denoted as point, the first rotation angle is denoted as angel_min, and the initial rotation end point is denoted as vot_point1. angel_min is initialized to 20 °, and the first preset stepangel_step_1 is set to 2%.
a. vot_point1 after the vehicle rotates counterclockwise about the axle center of the target wheel by angel_min from the rotation start point is calculated.
b. Whether the vehicle has a collision risk in a linear trajectory between vot_point1 and point is determined. If yes, angel_min+ = angel_step1, and step a is performed. If no, the current angel_min is used as the minimum rotation angle.

In an optional embodiment, that a maximum rotation angle of the vehicle rotating about an axle center of the target wheel in the parking-out trajectory is determined may include:

An initial second rotation angle is determined, and the following steps are cyclically performed: Whether the vehicle has a collision risk after rotating about the axle center of the target wheel by the second rotation angle from the rotation start point is determined, and when the vehicle has no collision risk, the second rotation angle is increased according to a second preset step to obtain a new second rotation angle, until the vehicle has a collision risk.

A rotation angle obtained by subtracting the second preset step from the finally obtained second rotation angle is determined as the maximum rotation angle of the vehicle rotating about the axle center of the target wheel in the parking-out trajectory.

It should be noted that, the first preset step and the second preset step may be the same or different.

For example, the target parking spot is at the right rear side of the vehicle. Referring to FIG. 8, the second preset step is denoted as angel_step2, the second rotation angle is denoted as angel_max, and the rotation end point after the vehicle rotates about the axle center of the target wheel by the second rotation angle from the rotation start point is denoted as vot_point2. angel_min is initialized to 60°, and the second preset step angel_step2 is set to 2%.

c. vot_point2 after the vehicle rotates counterclockwise about the axle center of the target wheel by angel _max from the rotation start point is calculated.

d. Whether a contour of the vehicle crosses a safe parking space boundary when the vehicle is located at vot_point2 is determined. That is, whether there is a collision risk after the vehicle rotates counterclockwise about the axle center of the target wheel by angel_max from the rotation start point is determined. If yes, angel_max+ = angel_step2, and step c is performed. If no, angel_max- = angel_step2, and the current angel _max is used as the maximum rotation angle.

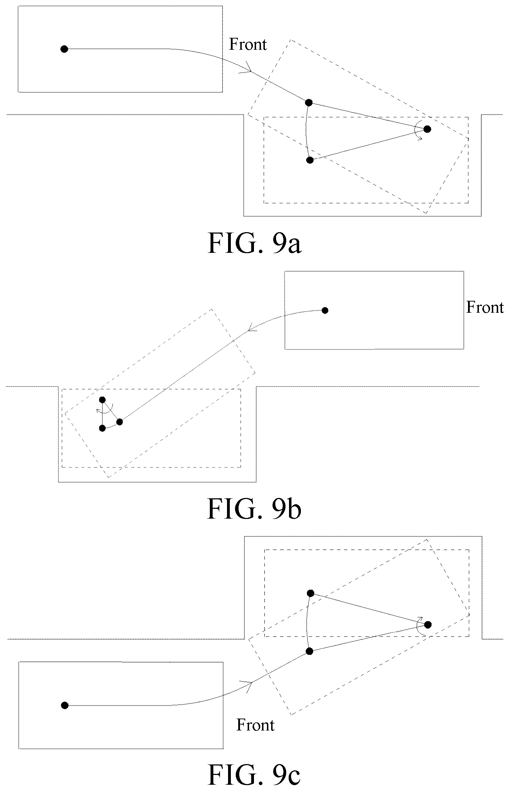

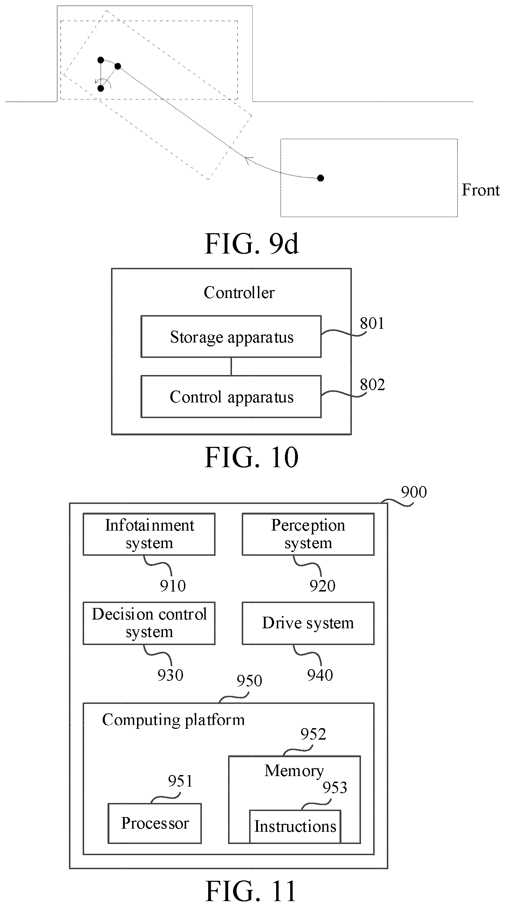

In an optional implementation, as shown in FIG. 9a, when the target parking spot is located at the right front side of the vehicle, the target wheel is a left front wheel of the vehicle. Correspondingly, the target parking trajectory is a head-in parking trajectory. Alternatively,
as shown in FIG. 9b, when the target parking spot is located at the right rear side of the vehicle, the target wheel is a left rear wheel of the vehicle. Correspondingly, the target parking trajectory is a back-in parking trajectory. Alternatively,
as shown in FIG. 9c, when the target parking spot is located at the left front side of the vehicle, the target wheel is a right front wheel of the vehicle. Correspondingly, the target parking trajectory is a head-in parking trajectory. Alternatively,
as shown in FIG. 9d, when the target parking spot is located at the left rear side of the vehicle, the target wheel is a right rear wheel of the vehicle. Correspondingly, the target parking trajectory is a back-in parking trajectory.

For example, as shown in FIG. 9a, when the target parking spot is located at the right front side of the vehicle, the corresponding head-in parking trajectory is as follows: The vehicle is first steered rightward into the target parking spot. Then, the vehicle rotates about an axle center of a left front wheel of the vehicle until the vehicle body is parallel to a long side of the target parking spot. Finally, the vehicle is adjusted forward or backward, so that the vehicle is located in the middle of the target parking spot. As shown in FIG. 9b, when the target parking spot is located at the right rear side of the vehicle, the corresponding back-in parking trajectory is as follows: The vehicle is first reversed rightward into the parking spot. Then, the vehicle rotates about an axle center of a left rear wheel of the vehicle until the vehicle body is parallel to a long side of the target parking spot. Finally, the vehicle is adjusted forward or backward, so that the vehicle is located in the middle of the target parking spot. As shown in FIG. 9c, when the target parking spot is located at the left front side of the vehicle, the corresponding head-in parking trajectory is as follows: The vehicle is first steered leftward into the target parking spot. Then, the vehicle rotates about an axle center of a right front wheel of the vehicle until the vehicle body is parallel to a long side of the target parking spot. Finally, the vehicle is adjusted forward or backward, so that the vehicle is located in the middle of the target parking spot. As shown in FIG. 9d, when the target parking spot is located at the left rear side of the vehicle, the corresponding back-in parking trajectory is as follows: The vehicle is first reversed leftward into the parking spot. Then, the vehicle rotates about an axle center of a right rear wheel of the vehicle until the vehicle body is parallel to a long side of the target parking spot. Finally, the vehicle is adjusted forward or backward, so that the vehicle is located in the middle of the target parking spot.

In this embodiment of the present disclosure, a head-in parking trajectory or a back-in parking trajectory may be planned according to a positional relationship between the target parking spot and the vehicle. This allows either head-in parking or back-in parking for the vehicle. In this way, head-in parking can be implemented in a scenario of a parallel parking spot on a dead-end road, while head-in parking cannot be implemented in the scenario of a parallel parking spot on a dead-end road during conventional parking.

An embodiment of the present disclosure further provides a controller. As shown in FIG. 10, the controller includes:
a storage apparatus 801, the storage apparatus 801 storing a computer program; and
a control apparatus 802, the control apparatus 802 being configured to execute the computer program to implement any of the foregoing parking trajectory planning methods.

In this embodiment of the present disclosure, the target parking trajectory of the vehicle from the initial parking point to the target parking point is determined according to the initial parking point, the target parking point, and the rotation start point of the vehicle for the target parking spot. The vehicle has a function of rotating about a single wheel. The rotation start point is a start point of rotation of the vehicle about a target wheel in a parking-out trajectory from the target parking point to the initial parking point. Therefore, the target parking trajectory can be planned through the single-wheel rotation function of the vehicle. In this way, when the vehicle is to be parked according to the target parking trajectory, the vehicle can be parked in a narrow parking spot at a time, thereby avoiding multiple gear shifts, reducing a time for parking the vehicle, and improving parking efficiency.

An embodiment of the present disclosure further provides a vehicle. The vehicle includes the foregoing controller.

In a feasible implementation, the vehicle includes four motors. Each motor correspondingly drives one wheel.

In this embodiment of the present disclosure, the target parking trajectory of the vehicle from the initial parking point to the target parking point is determined according to the initial parking point, the target parking point, and the rotation start point of the vehicle for the target parking spot. The vehicle has a function of rotating about a single wheel. The rotation start point is a start point of rotation of the vehicle about a target wheel in a parking-out trajectory from the target parking point to the initial parking point. Therefore, the target parking trajectory can be planned through the single-wheel rotation function of the vehicle. In this way, when the vehicle is to be parked according to the target parking trajectory, the vehicle can be parked in a narrow parking spot at a time, thereby reducing the number of gear shifts, reducing a time for parking the vehicle, and improving parking efficiency.

FIG. 11 is a block diagram of a vehicle 900 according to an exemplary embodiment. For example, the vehicle 900 may be a hybrid electric vehicle, or may be a non-hybrid electric vehicle, an electric vehicle, a fuel cell vehicle, or another type of vehicle. The vehicle 900 may be an autonomous driving vehicle or a semi-autonomous driving vehicle.

Referring to FIG. 11, the vehicle 900 may include various types of subsystems, for example, an infotainment system 910, a perception system 920, a decision control system 930, a drive system 940, and a computing platform 950. The vehicle 900 may further include more or fewer subsystems, and each subsystem may include multiple components. In addition, interconnection between each subsystem and between each component of the vehicle 900 may be implemented in a wired or wireless manner.

In some embodiments, the infotainment system 910 may include a communication system, an entertainment system, a navigation system, and the like.

The perception system 920 may include several types of sensors configured to sense information about an environment surrounding the vehicle 900. For example, the perception system 920 may include a global positioning system (the global positioning system may be a GPS system or a BeiDou system or another positioning system), an inertial measurement unit (IMU), a lidar, a millimeter wave radar, an ultrasonic radar, and a camera apparatus.

The decision control system 930 may include a computing system, a vehicle controller, a steering system, a throttle, and a braking system.

The drive system 940 may include a component that provides powered movement for the vehicle 900. In an embodiment, the drive system 940 may include an engine, an energy source, a transmission system, and wheels. The engine may be one or a combination of multiple of an internal combustion engine, an electric motor, and an air compression engine. The engine can convert energy provided by the energy source into mechanical energy.

Some or all functions of the vehicle 900 are controlled by the computing platform 950. The computing platform 950 may include at least one processor 951 and a memory 952. The processor 951 may execute instructions 953 stored in the memory 952.

The processor 951 may be any conventional processor, such as a commercially available CPU. The processor may further include, for example, a graphics processing unit (GPU), a field programmable gate array (FPGA), a system on chip (SOC), an application-specific integrated circuit (ASIC), or a combination thereof.

The memory 952 may be implemented by any type of volatile or non-volatile storage devices or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

In addition to the instruction 953, the memory 952 may further store data, such as a road map, route information, and a location, a direction, and a speed of a vehicle. The data stored in the memory 952 may be used by the computing platform 950.

In this embodiment of the present disclosure, the processor 951 may execute the instructions 953 to complete all or some of the steps of the foregoing parking trajectory planning method.

In another exemplary embodiment, a computer-readable storage medium including a program instruction is further provided. The program instruction, when executed by a processor, implements the steps of the foregoing parking trajectory planning method. For example, the computer-readable storage medium may be the memory 952 including the program instruction. The program instruction may be executed by the processor 951 of the vehicle 900 to complete the foregoing parking trajectory planning method. In another exemplary embodiment, a computer program product is further provided. The computer program product includes a computer program executable by a programmable apparatus. The computer program has code portions configured to perform the foregoing autonomous driving method when executed by the programmable apparatus.

The preferred implementations of the present disclosure are described in detail above with reference to the accompanying drawings. However, the present disclosure is not limited to the specific details in the foregoing implementations. Multiple simple variants may be made to the technical solutions of the present disclosure within a range of the technical concept of the present disclosure, and these simple variants fall within the protection scope of the present disclosure.

It should be additionally noted that, the specific technical features described in the foregoing specific implementations may be combined in any proper manner in a case without conflict. To avoid unnecessary repetition, various possible combination manners are not described in the present disclosure.

In addition, various different implementations of the present disclosure may alternatively be arbitrarily combined, as long as the idea of the present disclosure is not violated, and these combinations shall still be regarded as content disclosed in the present disclosure.

## Claims

1. A method for planning a parking trajectory, the method comprising:
determining an initial parking point, a target parking point, and a rotation start point of a vehicle for a target parking spot, the vehicle having a function of rotating about a single wheel, and the rotation start point being a start point of rotation of the vehicle about a target wheel in a parking-out trajectory from the target parking point to the initial parking point; and
determining a target parking trajectory of the vehicle from the initial parking point to the target parking point according to the initial parking point, the target parking point, and the rotation start point.

2. The method for planning a parking trajectory according to claim 1, wherein determining the target parking trajectory of the vehicle from the initial parking point to the target parking point according to the initial parking point, the target parking point, and the rotation start point comprises:
determining a first trajectory according to the target parking point and the rotation start point, and determining a second trajectory according to the rotation start point and the initial parking point; and
obtaining the target parking trajectory of the vehicle from the initial parking point to the target parking point according to the first trajectory and the second trajectory.

3. The method for planning a parking trajectory according to claim 2, wherein determining the first trajectory according to the target parking point and the rotation start point, and determining the second trajectory according to the rotation start point and the initial parking point comprises:
determining the first trajectory from the target parking point to the rotation start point, and determining the second trajectory from the rotation start point to the initial parking point; and
obtaining the target parking trajectory of the vehicle from the initial parking point to the target parking point according to the first trajectory and the second trajectory comprises:
splicing the first trajectory and the second trajectory to obtain an initial parking trajectory from the target parking point to the initial parking point, and reversing the initial parking trajectory to obtain the target parking trajectory of the vehicle from the initial parking point to the target parking point.

4. The method for planning a parking trajectory according to claim 2, wherein determining the second trajectory according to the rotation start point and the initial parking point comprises:
determining a minimum rotation angle and a maximum rotation angle of the vehicle rotating about an axle center of the target wheel in the parking-out trajectory, and determining a target rotation end point according to a first rotation end point after the vehicle rotates about the minimum rotation angle and a second rotation end point after the vehicle rotates about the maximum rotation angle;
determining a single-wheel rotation trajectory from the rotation start point to the target rotation end point, and an outside-spot parking trajectory from the target rotation end point to the initial parking point; and
splicing the single-wheel rotation trajectory and the outside-spot parking trajectory into the second trajectory from the rotation start point to the initial parking point.

5. The method for planning a parking trajectory according to claim 4, wherein determining the target rotation end point according to the first rotation end point after the vehicle rotates about the minimum rotation angle and the second rotation end point after the vehicle rotates about the maximum rotation angle comprises:
performing sampling between the first rotation end point after the vehicle rotates about the minimum rotation angle and the second rotation end point after the vehicle rotates about the maximum rotation angle to obtain a plurality of sampling points; and
determining, for each sampling point, a first candidate trajectory from the sampling point to the rotation start point through different trajectory planning algorithms, determining a target candidate trajectory according to a trajectory cost of each first candidate trajectory, and using a sampling point corresponding to the target candidate trajectory as the target rotation end point;
correspondingly, the outside-spot parking trajectory being the target candidate trajectory.

6. The method for planning a parking trajectory according to claim 5, wherein the trajectory cost of the first candidate trajectory is determined based on at least one of a trajectory length of the first candidate trajectory, a single-wheel rotation angle of the vehicle in the first candidate trajectory, a collision risk value of the vehicle in the first candidate trajectory, and the number of gear shifts of the vehicle in the first candidate trajectory.

7. The method for planning a parking trajectory according to claim 5, wherein determining the target candidate trajectory according to the trajectory cost of the each first candidate trajectory comprises:
when the vehicle has no collision risk with a surrounding obstacle in any of the first candidate trajectories, determining the target candidate trajectory according to the trajectory cost of each first candidate trajectory; and
the method further comprising:
when the vehicle has a collision risk with a surrounding obstacle in a first candidate trajectory, determining a second candidate trajectory from each sampling point to the initial parking point in sequence through a trajectory search method, until the vehicle has no collision risk with the surrounding obstacle in the obtained second candidate trajectory; and
determining the finally obtained second candidate trajectory as the target candidate trajectory.

8. The method for planning a parking trajectory according to any one of claims 4 to 7, wherein the minimum rotation angle is greater than a first preset angle, and the vehicle has no collision risk with any obstacle surrounding the target parking spot during driving out of the target parking spot in a straight line along the first rotation end point corresponding to the minimum rotation angle; and
the maximum rotation angle is less than a second preset angle, and the vehicle has no collision risk with any obstacle outside the target parking spot during rotation about the maximum rotation angle.

9. The method for planning a parking trajectory according to any one of claims 4 to 7, wherein determining the minimum rotation angle of the vehicle rotating about the axle center of the target wheel in the parking-out trajectory comprises:
determining an initial first rotation angle, and cyclically performing the following steps: determining an initial rotation end point after the vehicle rotates about the axle center of the target wheel by the first rotation angle from the rotation start point, determining a linear trajectory between the initial rotation end point and a target rear axle center point of the vehicle, and increasing the first rotation angle according to a first preset step when the vehicle has a collision risk in the linear trajectory to obtain a new first rotation angle until the vehicle has no collision risk in the obtained linear trajectory, wherein the target rear axle center point is located at a portion of the vehicle outside the target parking spot and a distance from the initial rotation end point in a target direction is a preset distance, the target direction being a direction parallel to a short side of the target parking spot; and
determining the finally obtained first rotation angle as the minimum rotation angle of the vehicle rotating about the axle center of the target wheel in the parking-out trajectory.

10. The method for planning a parking trajectory according to any one of claims 4 to 7, wherein determining the maximum rotation angle of the vehicle rotating about the axle center of the target wheel in the parking-out trajectory comprises:
determining an initial second rotation angle, and cyclically performing the following steps: determining whether the vehicle has a collision risk after rotating about the axle center of the target wheel by the second rotation angle from the rotation start point, and when the vehicle has no collision risk, increasing the second rotation angle according to a second preset step to obtain a new second rotation angle, until the vehicle has a collision risk; and
determining a rotation angle obtained by subtracting the second preset step from the finally obtained second rotation angle as the maximum rotation angle of the vehicle rotating about the axle center of the target wheel in the parking-out trajectory.

11. The method for planning a parking trajectory according to any one of claims 1 to 7, wherein when the target parking spot is located at the right front side of the vehicle, the target wheel is a left front wheel of the vehicle, and correspondingly, the target parking trajectory is a head-in parking trajectory; or
when the target parking spot is located at the right rear side of the vehicle, the target wheel is a left rear wheel of the vehicle, and correspondingly, the target parking trajectory is a back-in parking trajectory; or
when the target parking spot is located at the left front side of the vehicle, the target wheel is a right front wheel of the vehicle, and correspondingly, the target parking trajectory is a head-in parking trajectory; or
when the target parking spot is located at the left rear side of the vehicle, the target wheel is a right rear wheel of the vehicle, and correspondingly, the target parking trajectory is a back-in parking trajectory.

12. A computer-readable storage medium, having a computer program instruction stored therein, the computer program instruction, when executed by a processor, implementing the method for planning a parking trajectory according to any one of claims 1 to 11.

13. A controller, comprising:
a storage apparatus, the storage apparatus storing a computer program; and
a control apparatus, the control apparatus being configured to execute the computer program to implement the method for planning a parking trajectory according to any one of claims 1 to 11.

14. A vehicle, comprising the controller according to claim 13.

15. The vehicle according to claim 14, comprising four motors, each motor correspondingly driving one wheel.
